**Europäisches Patentamt**

**European Patent Office**

**Office européen des brevets**

(19)

(11) Veröffentlichungsnummer : **0 094 030**
**B1**

(12) **EUROPÄISCHE PATENTSCHRIFT**

(45) Veröffentlichungstag der Patentschrift :
16.04.86

(21) Anmeldenummer : 83104396.3

(22) Anmeldetag : 04.05.83

(51) Int. Cl.⁴ : **C 04 B 35/60, C 04 B 35/00,**
**C 04 B 35/48**

(54) **Keramischer Formkörper und Verfahren zu seiner Herstellung.**

(30) Priorität : 04.05.82 DE 3216651

(43) Veröffentlichungstag der Anmeldung :
16.11.83 Patentblatt 83/46

(45) Bekanntmachung des Hinweises auf die Patenterteilung : 16.04.86 Patentblatt 86/16

(84) Benannte Vertragsstaaten :
AT BE CH DE FR GB IT LI NL SE

(56) Entgegenhaltungen :
EP-A- 0 042 130
CH-A- 234 320
CH-A- 234 321
FR-A- 2 080 357
FR-A- 2 106 793
FR-A- 2 405 308
FR-A- 2 457 267
US-A- 3 340 334
US-A- 4 316 964

(73) Patentinhaber : Max-Planck-Gesellschaft zur Förderung der Wissenschaften e.V.
Bunsenstrasse 10
D-3400 Göttingen (DE)

(72) Erfinder : Claussen, Nils, Dr.
Forschenweg 24
D-7250 Leonberg (DE)
Erfinder : Lindemann, Gert
Im Lerchenweg 10
D-7114 Lichtenstein/Württ. (DE)
Erfinder : Petzow, Günter, Prof. Dr. Dr. h. c.
Tannenweg 7
D-7022 Leinfelden - Echterdingen (DE)
Erfinder : Rohrbach, Ulrich
Heisenbergstrasse 5
D-7000 Stuttgart 80 (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

**Beschreibung**

Die Erfindung betrifft einen Formkörper aus einer hochschmelzenden oxidkeramischen Matrix, in der Zirkoniumdioxid (ZrO$_2$) oder/und Hafniumoxid (HfO$_2$) sehr fein und gleichmäßig verteilt vorliegen sowie ein Verfahren zur Herstellung dieses Formkörpers.

Es ist bekannt, den Bruchwiderstand (K$_{Ic}$) und damit die Festigkeit keramischer Werkstoffe durch Einlagerung von ZrO$_2$- oder/und HfO$_2$-Teilchen zu verbessern (DE-B 25 49 652 ; DE-A 27 44 700). Als Ursache der erzielten Verbesserung wird die mit einer Volumenausdehnung verbundene Umwandlung der tetragonalen in die monokline Form der (Hf, Zr)O$_2$-Teilchen angesehen. Eine Diskussion der für die Erhöhung der K$_{Ic}$ verantwortlichen Mechanismen findet sich in einer Übersicht von Claussen in Z. für Werkstofftechnik 1982 unter dem Titel « Umwandlungsverstärke keramische Werkstoffe ». Weitere Veröffentlichungen hierzu sind enthalten in Band 3 von « Advances in Ceramics » 1981, in dem die Beiträge der ersten Conf. of the Science and Technology of ZrO$_2$, Cleveland, 1980, enthalten sind. Daraus läßt sich entnehmen, daß unabhängig vom angenommenen Mechanismus das Ausmaß der erzielten Verbesserung direkt proportional dem Volumenanteil und umgekehrt proportional zur Größe der dispergierten Teichen der umwandlungsfähigen Phase ZrO$_2$-Phase ist, wobei eine gleichmäßige Verteilung möglichst gleich großer Teilchen erstrebenswert ist. Die ZrO$_2$-Phase ist beispielsweise in einer Al$_2$O$_3$-Matrix noch umwandlungsfähig, wenn die ZrO$_2$-Teilchengröße zwischen 0,3 und 0,5 µm liegt. Anzustreben wäre daher bei einem Formkörper mit einer Al$_2$O$_3$-Matrix, daß alle ZrO$_2$-Teilchen einen Durchmesser von ca. 0,3 µm besitzen. Bisher ist jedoch kein Verfahren bekannt, mit dem es möglich wäre, eine derartige Gleichmäßigkeit und Feinheit der dispergierten umwandlungsfähigen Phase zu erzielen.

In fast allen bisher untersuchten ZrO$_2$-Keramiksystemen wird ein Maximum der Bruchzähigkeit (K$_{Ic}$) bei etwa 15 Vol.-% ZrO$_2$ gefunden. Liegt der ZrO$_2$-Anteil höher, kommt es während des Sinterns zu einer übermäßigen Vergröberung der ZrO$_2$-Teilchen, die vollständig in die monokline Form umwandeln und in Folge ihrer Ausdehnung große, überkritische Risse in der keramischen Matrix erzeugen. Dies wiederum führt zu einer Verringerung von K$_{Ic}$ und der Festigkeit. Gleiches gilt für HfO$_2$-Teilchen. Soweit daher im folgenden ZrO$_2$ angeführt wird, gelten die Angaben sinngemäß ebenso für HfO$_2$-Teilchen.

Zur Verbesserung der Dispersionshomogenität der ZrO$_2$-Phase ist es bekannt, einen Formkörper vorzusehen, der aus eutektischen Gefügebestandteilen besteht, die ZrO$_2$ und ein oder mehrere hochschmelzende Oxide als Matrix enthalten. Bei einer eutektischen Zusammensetzung des Gemisches liegt der niedrigstmögliche Schmelzpunkt der Mischung vor. Die Herstellung und der Gefügeaufbau keramischer Teilchen mit eutektischer Zusammensetzung, insbesondere aus ZrO$_2$ und Al$_2$O$_3$, ist aus den Patenten der Schleifmittelindustrie bekannt, z. B. aus DE-B 22 27 642, US-A 3 881 282, US-A 3 891 408 und EP-A 0 042 130. Dort wird gelehrt, daß die durch Abkühlung in metallischen Gußformen bzw. zwischen Walzen hergestellten Körner aus eutektischen Inseln, die ZrO$_2$ in Stäbchen- bzw. Lamellenform enthalten, bestehen. Die mittleren Durchmesser der Stäbchen bzw. Lamellen liegen zwichen 0,1 und 0,3 µm, diese wiederum liegen in Zellen mit einer Stärke von 5 bis 60 µm und einer Länge von bis zu mehreren mm vor.

Die Verwendung eutektischer Gefügebestandteile hat jedoch den Nachteil, daß einerseits beim Pulverisieren eine zumindest teilweise Trennung der eutektischen Komponenten auftritt (besonders, wenn die Pulverteilchen auf die Größenordnung der kleinsten Dimensionen der eutektischen Bestandteile reduziert werden) und andererseits die ZrO$_2$-Stäbchen (bzw. Lamellen) beim Sintern oder Heißpressen koagulieren und damit die angestrebte Teilchengröße von 0,3 bis 0,5 µm deutlich überschreiten.

Diese Effekte wirken sich nachteilig auf die Homogenität und den Bruchwiderstand des Formkörpers aus.

Aus der CH-A-234320 und aus CH-A 234321 ist es bekannt, geschmolzenes feuerfestes Material, z. B. auf Aluminiumoxid- oder Zirkonbasis, vor dem Verpressen einer schnellen Abkühlung zu unterziehen. Weiterhin ist es aus US-A 4 316 964 bekannt, den Bruchwiderstand und die Festigkeit einer Aluminiumoxid/Zirkoniumoxidkeramik durch Einbau von metastabilem, tetragonalem ZrO$_2$ zu erhöhen. Auf diese Weise werden Keramiken erhalten, worin die Zirkoniumdioxidteilchen einen mittleren Durchmesser von 200 bis 1 000 nm haben.

Der Erfindung liegt die Aufgabe zugrunde, diese Schwierigkeiten zu überwinden und einen Formkörper und ein Verfahren zu seiner Herstellung anzugeben, indem die umwandlungsfähige Phase in der theoretisch als am günstigsten erkannten Gleichmäßigkeit und Feinheit vorliegt.

Gelöst wird diese Aufgabe erfindungsgemäß durch ein Verfahren zur Herstellung eines Formkörpers aus einer hochschmelzenden oxidkeramischen Matrix, in der Zirkoniumdioxid und/oder Hafniumoxid sehr fein und gleichmäßig verteilt ist, das dadurch gekennzeichnet ist, daß man eine keramische Schmelze aus Matrixmaterial und Zirkoniumdioxid und/oder Hafniumdioxid in feinteiliger Form mit solcher Geschwindigkeit abschreckt, daß eine nicht kristalline bzw. mikrokristalline Erstarrung erfolgt, der abgeschreckten feinteiligen Schmelze ggf. pulverisiertes Matrixmaterial in der zur Erzielung der gewünschten Endzusammensetzung von 5 bis 45, insbesondere von 10 bis 30 Vol.-% an ZrO$_2$ und/oder HfO$_2$-Phase erforderlichen Menge zumischt, aus dem abgeschreckten Pulver einen Preßkörper formt und letzteren so einer Wärmebehandlung unterzieht, daß die Zirkoniumdioxid- und/oder Hafniumdioxid-Phase in Form von Teilchen mit einem mittleren Durchmesser von 0,3 bis 0,5 $\mu$m vorliegt.

Für das Verfahren der Erfindung ist wesentlich, daß das Abschrecken der Schmelzeteilchen so schnell erfolgt, daß sie mikrokristallin bzw. glasförmig (amorph) erstarren und auch bei den besonders niedrigschmelzenden Zusammensetzungen, die der eutektischen Nominalzusammensetzung entsprechen oder ihr nahekommen, eine eutektische Reaktion vermieden wird. Die hierzu erforderlichen Abschreckgeschwindigkeiten sind von der Größe der Schmelzeteilchen und vom verwendeten Verfahren abhängig. Liegt beispielsweise bei der Flammversprühung der Durchmesser der Schmelzeteilchen unter 80 $\mu$m, so erwiesen sich Abschreckgeschwindigkeiten zwischen $10^3$ und $10^4$ K/s als ausreichend, um eine eutektische Reaktion, also die Ausbildung der erwähnten Lamellen oder Stäbchen zu verhindern und eine glasig amorphe oder mikrokristalline Modifikation zu erzielen. Auf diese Weise hergestellte abgeschreckte Kügelchen mit glasigem Aussehen bestehen nach transmissionselektronen mikroskopischen (TEM) Untersuchungen aus 5 bis 20 nm großen, tetragonalen $ZrO_2$-Teilchen, die gleichmäßig in einer mikrokristallinen $Al_2O_3$-Matrix (ca. 10 nm) vorliegen, bei der es sich um die $\varepsilon$-Phase handelt. Nach Ber. Dt. Keram. Ges. (1965) 216 ist die $\varepsilon$-Phase eine $ZrO_2$-haltige Hochtemperaturmodifikation des $Al_2O_3$. Bei einer Wärmebehandlung dieser glasigen Kügelchen wandelt sich die $\varepsilon$-Phase vollständig in die $\alpha$-Modifikation um. Der Bruchwiderstand (Vickerseindruckmethode) ist bei dem aus diesen mikrokristallinen Pulvern hergestellten Formkörper beträchtlich besser als bei aus eutektisch erstarrten Pulvern hergestellten Formkörpern. Andererseits tritt bei einer Unterschreitung dieser Abschreckgeschwindigkeit ein lamellenförmiges Eutektikum auf mit entsprechend verschlechterten Eigenschaften der daraus hergestellten Formkörper.

Hieraus ergibt sich, daß bei ausreichend schneller Abschreckung der Schmelzeteilchen diese in mikrokristalliner oder amorpher Form erstarren und beide Komponenten fein und gleichmäßig vermischt sind. Außerdem wird angenommen, daß eine metastabile Übersättigung auftritt, die zur Stabilisierung der tetragonalen Form des $ZrO_2$ beiträgt. Bei der anschließenden Wärmebehandlung der Formkörper kann die Stabilisierung so weit verringert werden, daß man ein optimales Umwandlungsverhalten der $ZrO_2$-Teilchen und damit optimale Festigkeit des Formkörpers erreicht.

Die Herstellung der dem Abschrecken unterworfenen feinen Schmelzeteilchen kann nach an sich bekannten Methoden erfolgen. Bevorzugt wird die Schmelze durch Flammsprühen oder Hochdruckwasserzerstäubung zerteilt und abgeschreckt. Ebenfalls geeignet ist z. B. das in Z. Metallkunde 69 (1978) 773 beschriebene Stoßwellenrohr und die ebenfalls dort beschriebene Splat-Cool-Vorrichtung.

Vorzugsweise erfolgt erfindungsgemäß die Abkühlung mit einer Geschwindigkeit von mindestens $10^4$ bis $10^5$ K/s.

Die Erzielung einer sehr hohen Abkühlungsgeschwindigkeit wird erleichtert, wenn die Schmelze in möglichst feine Teilchen zerstäubt wird. Bevorzugt wird daher die Schmelze zu Teilchen von weniger als 80 $\mu$m versprüht.

Außerdem sind Abkühlgeschwindigkeit und Teilchenform vom angewendeten Zerstäubungs- und Abschreckverfahren abhängig. Bei Wasserverdüsung, wie unten näher beschrieben, erhält man spratzige Teilchen, bei Flammzerstäubung runde Teilchen.

Besonders günstige Ergebnisse werden erhalten, wenn die Schmelze eine Zusammensetzung aufweist, die dem jeweiligen Eutektikum von Matrix und Einlagerungsmaterial entspricht oder zumindest ihm nahekommt. Im Falle von $Al_2O_3$ als Matrix und $ZrO_2$ als Einlagerungsmaterial liegt das Eutektikum bei etwa 33 Vol.-% $ZrO_2$ und 67 Vol.-% $Al_2O_3$. Als dem Eutektikum nahekommende Zusammensetzungen werden hier solche verstanden, bei denen die Menge des Einlagerungsmaterials nicht mehr als ± 20 % von der eutektischen Nominalzusammensetzung abweicht, bezogen auf den eutektischen Nominalanteil als 100 %.

Da das Eutektikum oder nahekommende Zusammensetzungen in der Regel einen höheren Gehalt an umwandlungsfähiger Phase, wie z. B. $ZrO_2$, aufweisen, als vielfach zur Erzielung der angestrebten Eigenschaften gewünscht wird, setzt man gemäß einer bevorzugten Ausführungsform des erfindungsgemäßen Verfahrens dem aus der abgeschreckten feinteiligen eutektischen bzw. naheeutektischen Schmelze erhaltenen Pulver weiteres pulverförmiges Matrixmaterial in der zur Erzielung der gewünschten Endzusammensetzung erforderlichen Menge zu. Die Mischung wird dann fein vermahlen, vorzugsweise im Attritor und dann zum Formkörper gepreßt und der Wärmebehandlung unterzogen.

Als Matrixmaterial läßt sich prinzipiell jede hochschmelzende oxidkeramische Masse verwenden. Bevorzugt wird im Rahmen der Erfindung jedoch $Al_2O_3$, Spinell oder/und Mullit. Unter den Spinellen werden wiederum stöchiometrische oder $Al_2O_3$-reiche Al-Mg-Spinelle bevorzugt. Der Gehalt an umwandlungsfähiger Phase ($ZrO_2$) liegt im allgemeinen zwischen etwa 5 und etwa 45 Vol-%, vorzugsweise zwischen 10 und 30 Vol.-%. Innerhalb dieser Grenzwerte lassen sich erfindungsgemäß die besten Ergebnisse hinsichtlich Verbesserung des Bruchwiderstandes und Festigkeit erzielen.

Unter den oben angegebenen bevorzugten Bedingungen ist es möglich, auch naheutektische Zusammensetzungen (z. B. $Al_2O_3$-reich) zu mikrokristallinen bzw. glasförmigen Teilchen abzuschrecken. Bei solchen Zusammensetzungen ist es mit anderen Dispersionsverfahren meist nicht möglich, ohne Stabilisierungszusätze die tetragonale Modifikation völlig zu erhalten. Im Falle höherer $ZrO_2$-Gehalte (z. B. eutektische Zusammensetzung) erleichtern bei der Herstellung von Formkörpern geringe Zusätze von MgO bzw. von $Y_2O_3$ (oder anderen SE-Oxide) die Erhaltung der tetragonalen Form während des Sinterprozesses. Am günstigsten ist es jedoch, möglichst eutektische Zusammensetzungen (z. B. 57 Gew.-% $Al_2O_3$ + 43 Gew.-% $ZrO_2$) zu verdüsen und die so erhaltenen mikrokristallinen bzw. amorphen Pulver mit dem Matrixmaterial so anzureichern und zu vermischen, daß die Endzusammensetzung im Sinterkörper im gewünschten Bereich liegt, vorzugsweise 10 bis 30 Gew.-% $ZrO_2$ enthält. Dadurch ist es möglich, auch ohne Stabilisierungszusätze wie $Y_2O_3$ (die die notwendige Umwandlungsfreudigkeit der tetragonalen $ZrO_2$-Teilchen herabsetzen) einen relativ $ZrO_2$-reichen Keramikpreßkörper unter Beibehaltung der tetragonalen Form zu sintern bzw. heißisostatisch zu pressen. Im allgemeinen sollte daher der Stabilisierungsmittelzusatz etwa 2 Gew.-% des Einlagerungsmaterials nicht übersteigen.

Nachdem gegebenenfalls die für den Formkörper gewünschte Zusammensetzung eingestellt ist, preßt man das Pulver in die gewünschte Form und unterzieht es einer Wärmebehandlung. Als Wärmebehandlung wendet man vorzugsweise eine Sinterung oder/und heißisostatische Verpressung an. Vorzugsweise wird der gepreßte Formkörper so vorgesintert, daß er keine offene Porosität mehr besitzt und anschließend heißisostatisch gepreßt wird. Durch Temperatur und Dauer der Wärmebehandlung kann dabei eine Kristallisation und ein Wachstum der Einlagerungsteilchen erzielt werden, das sich zu einer optimalen Größe steuern läßt, bei der ein möglichst hoher Anteil an tetragonalen $ZrO_2$-Teilchen beim Bruchvorgang sich in die monokline Form umwandelt (gemessen entlang der Bruchfläche). Die optimale Umwandlungsfreudigkeit tetragonaler $ZrO_2$-Teilchen läßt sich nach der in J. Am. ceram. Soc. 64 (1981) C 72 beschriebenen röntgenografischen Methode quantitativ bestimmen. Bei dieser Methode wird die Umwandlungstiefe an Bruchflächen gemessen. Mit Hilfe dieser Methode lassen sich die günstigsten Wärmebehandlungsbedingungen hinsichtlich Zeit und Temperatur im Rahmen des erfindungsgemäßen Verfahrens für jede Zusammensetzung leicht ermitteln.

Ein erfindungsgemäßer Formkörper aus einer hochschmelzenden oxidkeramischen Matrix und einer in der Matrix fein und gleichmäßig verteilten Zirkoniumdioxid- und/oder Hafniumdioxid-Phase ist erhältlich durch Abschrecken einer keramischen Schmelze aus Matrixmaterial und Zirkoniumdioxid und/oder Hafniumdioxid in feinteiliger Form mit einer solchen Geschwindigkeit, daß eine nicht kristalline bzw. mikrokristalline Erstarrung erfolgt, gegebenenfalls Zumischen von pulverisiertem Matrixmaterial zur abgeschreckten feinteiligen Schmelze in der zur Erzielung der gewünschten Endzusammensetzung von 5 bis 45, insbesondere 10 bis 30 Vol.-% an $ZrO_2$ und/oder $HfO_2$-Phase erforderlichen Menge, Formung eines Preßkörpers aus dem abgeschreckten Pulver und Wärmebehandlung des Preßkörpers in der Weise, daß die Zirkoniumdioxid- und/oder Hafniumdioxid-Phase in Form von Teilchen mit einem mittleren Durchmesser von 0,3 bis 0,5 μm vorliegt.

Besonders geeignet zur Durchführung des erfindungsgemäßen Verfahrens ist eine Vorrichtung zur Druckzerstäubung von Schmelzen, die einen Schmelzbehälter 8 mit einer Düse 1 für den Austritt der Schmelze, die in einen Behälter 12 einmündet, hat und eine Mehrzahl von um die Düse 1 angeordnete Fluidaustrittsdüsen 2, die so angebracht sind, daß die unter Druck daraus in den Behälter austretenden Fluidstrahlen parallel oder unter einem Winkel zu dem Schmelzestrahl, der aus der Düse 1 austritt, verlaufen.

Vorzugsweise sind die Düsen 2 so angeordnet, daß die daraus austretenden Fluidstrahlen den Schmelzestrahl in einer bestimmten Entfernung von der Düse 1 innerhalb des Behälters 12 schneiden.

Die Düse 1 ist vorzugsweise von einer regelbaren Heizeinrichtung 7 umgeben. Letztere kann beispielsweise aus einer Induktionsspule oder einer Heißdrahtwicklung, z. B. aus Platin, bestehen.

Die Erfindung und Vorrichtung zu ihrer Durchführung werden im folgenden anhand der beigefügten Zeichnung näher erläutert. In dieser stellen dar :

Figur 1 eine Schnittansicht einer Vorrichtung zum Flammversprühen und Abschrecken von Schmelzen.

Figur 2 eine Schnittansicht einer erfindungsgemäßen Schmelzezerstäubungs- und Abschreckvorrichtung.

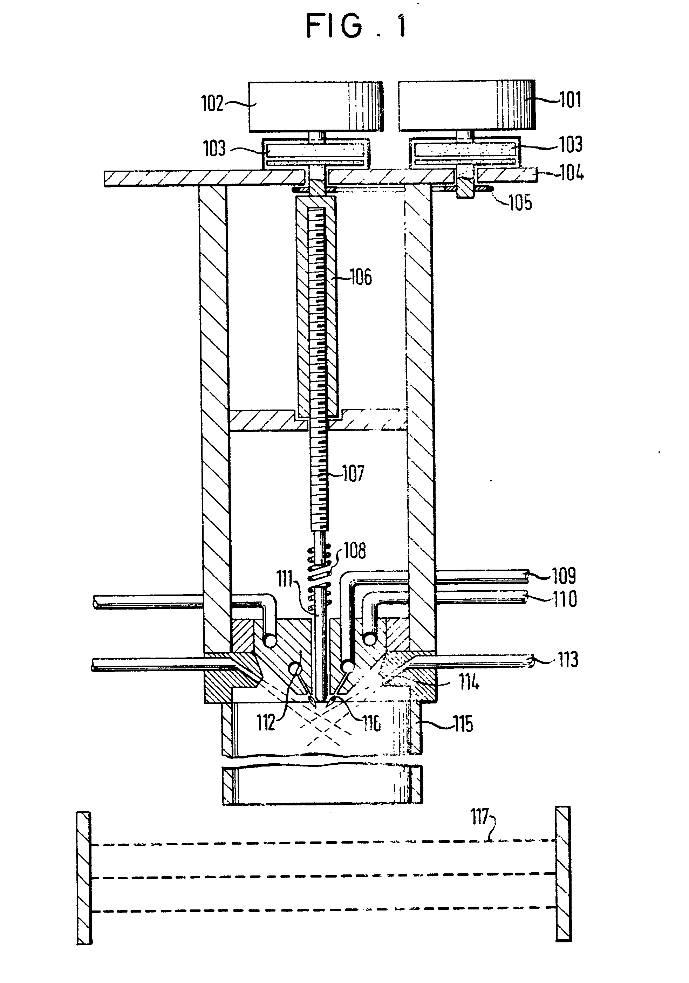

In Fig. 1 ist eine Vorrichtung zur extrem raschen Abkühlung von Schmelzen durch Flammversprühung, kombiniert mit Wasserabschreckung, dargestellt. Zwei Antriebsmotoren (101, 102) sind über je eine Magnetkupplung (103) mit einem O-Ring (105) verbunden und werden von einer Befestigungsplatte (104) getragen. Der O-Ring (105) ist über einen Gewindevortrieb (106) mit einer Spindel (107) verbunden, die über eine Feder (108) mit einem federnd aufgehängten Probenstab (111) verbunden ist. Der Probenstab (111) erstreckt sich durch eine Bohrung im Ringbrenner (112) in einen zylindrischen Behälter (115). Der Ringbrenner (112) weist eine Mehrzahl von Flammdüsen (116) auf, die den Austritt des Probenstabes (111) konzentrisch umgeben und über Brennstoffzuleitungen (109) mit einem geeigneten Brennstoff versorgt werden, Kühlwasserkanäle (110) dienen zur Kühlung des Ringbrenners (112).

Unterhalb des Ringbrenners (112) sind Wasserdüsen (114) über eine Frischwasserzuleitung (113) so angeschlossen, daß ihre Wasserstrahlen sich unterhalb der durch den Ringbrenner erzeugten Flammen schneiden. Eine Siebkette (117) unterhalb des Zylinders (115) dient zum Auffangen und Klassieren der abgeschreckten Schmelzeteilchen.

Beim Betrieb dieser Vorrichtung wird der Probenstab (111), der aus einer Mischung von Matrix und Einlagerungsmaterial, vorzugsweise in eutektischer oder naheeutektischer Zusammensetzung, besteht, durch die Flammen unterhalb des Ringbrenners aufgeschmolzen und zerstäubt und die zerstäubten Teilchen werden unmittelbar danach durch die Wasserstrahlen aus den Frischwasserdüsen (118) abgeschreckt und durch die Siebkette (117) aufgefangen. Mit dieser Vorrichtung ist es möglich, überwiegend amorph, teilweise mikrokristallin erstarrte Schmelzekügelchen zu erzielen.

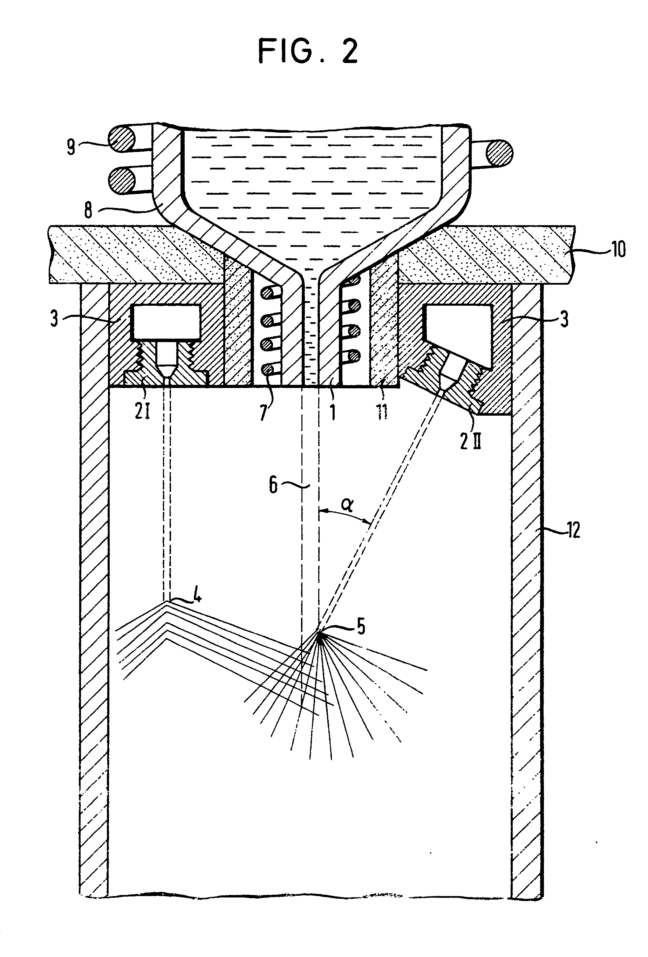

Noch höhere Abschreckgeschwindigkeit und damit völlig amorph erstarrte Schmelzekügelchen lassen sich mit der in Fig. 2 dargestellten Vorrichtung erzielen. In dieser dient eine Düse (1) zum Austritt einer Schmelze, die im Schmelztiegel (8) durch eine geeignete Heizvorrichtung, beispielsweise eine Induktionsspule (9) erzeugt wird. Konzentrisch um die Düse (1) angeordnete Fluiddüsen (2), für ein Fluid wie Wasser, werden durch einen Ringkanal (3) gespeist und sind so angeordnet, daß sie das unter hohem Druck zugeführte Fluid in einem Strahl abgeben, der entweder parallel zu dem aus der Düse (1) austretenden Schmelzestrahl verläuft (Düse 2 I) oder so, daß der Fluidstrahl den Schmelzestrahl in einer bestimmten Entfernung schneidet (Düse 2 II). Der Zerfallsbereich des parallel zum Schmelzestrahl geführten Hochdruckstrahls ist mit (4) bezeichnet, der laminare Schmelzestrom (6) zerstäubt bei (5). Eine Induktionsspule (7) dient zur Beheizung des die Düse (1) mit dem Schmelztiegel (8) verbindenden Kanals und wirkt als thermisches Ventil. Um den Schmelztiegel (8) ist eine Induktionsspule (9) angeordnet zum Schmelzen der Mischung von Matrixmaterial und Einlagerungsmaterial im Schmelztiegel (8). Keramische Isolationsteile (10, 11) schließen die Verdüsungszone ab.

Im Betrieb tritt ein Hochdruckfluid, beispielsweise Wasser mit einem Druck bis zu beispielsweise 200 bar durch 8 Düsen (2) aus, die konzentrisch um die Schmelzeaustrittsdüse (1) angeordnet sind. Bei einem Druck von 200 bar wird hierbei eine Geschwindigkeit von etwa 250 m/s erreicht. Aufgrund der hohen Austrittsgeschwindigkeit stellt sich unterhalb der Düse (1) ein Vakuum von etwa 10 Torr (13,3 mbar) ein (Prinzip der Wasserstrahlpumpe), das den parallel geführten Strahl (Fall I) nach einer kurzen Wegstrecke laminaren Ausströmens bei (4) explosionsartig zerplatzen läßt. Die Zerstäubung der Schmelze findet darauf bei (5) statt. Im Fall der geneigten Düsenstellung (Fall II) kann der Hochgeschwindigkeitsfluidstrahl den Schmelzestrom (6) vor seinem Zerplatzen bei (5) treffen. Hierbei läßt sich eine noch höhere Abschreckgeschwindigkeit erzielen, jedoch besteht die Möglichkeit, daß Kühlfluid in Richtung der Düse (1) spritzt und ein Erkalten der Schmelze bewirkt.

Diese Gefahr besteht bei der parallelen Strahlführung mit Düsenstellung I nicht.

Durch die als thermisches Ventil wirkende Heizvorrichtung (7) kann das verjüngte Ende des Schmelztiegels (8) und damit die Schmelzeaustrittsdüse (1) so erwärmt werden, das der Schmelzfluß kontrolliert eingeleitet werden kann.

Die Erfindung ermöglichte so, keramische Formkörper herzustellen, welche nach bekannten Verfahren für die gleichen Keramiken nicht erzielbare Werte für Festigkeit und Bruchwiderstand aufweisen. Die Verbesserung beruht auf einer besonders feinen und gleichmäßigen Verteilung des zu einer Umwandlung der Kristallform unter Volumenausdehnung befähigten Einlagerungsmaterials. Aufgrund dieser überlegenen Eigenschaften der erfindungsgemäßen keramischen Formkörper eignen sich diese besonders zum Einsatz bei thermisch und festigkeitsmäßig hoch beanspruchten Maschinenteilen.

Die folgenden Beispiele erläutern die Erfindung weiter :

Beispiel 1

55 g $Al_2O_3$ und 40 g reines $ZrO_2$ (entspricht der eutektischen Zusammensetzung) werden 20 min mit Wasser in einer Planetenkugelmühle vermischt, anschließend getrocknet und durch ein 250 µm Sieb gepreßt. Die so erhaltenen Agglomerate werden isostatisch bei 600 MPa zu Zylindern gepreßt und 1 h bei 1 500 °C an Luft gesintert.

Die Zylinder werden in der in Fig. 2 dargestellten Apparatur in einem Graphittiegel aufgeschmolzen und verdüst. Das schnell abgeschreckte, grau erscheinende Pulver, das kaum Röntgenreflexe zeigte, wird bei 800 °C geglüht (um eventuell aufgenommenen Kohlenstoff zu entfernen bzw. die stoichiometrische Zusammensetzung wieder herzustellen) ; anschließend werden 50 g des verdüsten Pulvers mit 35 g $Al_2O_3$ (Teilchengröße 0,5 µm) 4 h in einer Attritormühle, die mit $Al_2O_3$-Armen und -Kugeln (2 bis 3 mm) bestückt ist, in Wasser vermischt, fein gemahlen und dann gefriergetrocknet. Der $ZrO_2$-Gehalt beträgt danach 25 Gew.-%. Das so erhaltene Mischpulver, das eine spezifische Oberfläche von 25 m²/g besitzt, wird isostatisch bei 600 MPa zu rechteckigen Probekörpern gepreßt und 1 h bei 1 450 °C an Luft gesintert. Die Proben enthalten danach bei einer Dichte von 95 % Trockendichte (TD) 100 % tetragonales $ZrO_2$ und nach dem Überschleifen noch ca. 70 % (Rest monoklin). Die 3-Punkt-Biegefestigkeit beträgt 580 ± 30 MPa. Die an der Bruchfläche gemessene Umwandlungstiefe ist 1,3 µm.

Beispiel 2

Nach Beispiel 1 hergestellte Proben werden 20 min bei 1 500 °C und 2 000 bar in Inertgasatmosphäre (Argon) heißisostatisch ohne Hüllmaterial gepreßt. Der tetragonale Anteil der $ZrO_2$-Teilchen beträgt immer noch fast 100 %, nach dem Überschleifen jedoch nur noch ca. 45 %. Die Festigkeit der 100 % dichten Probe ist im überschliffenen Zustand 950 ± 35 MPa. Die Umwandlungstiefe ist 3,1 μm.

Beispiel 3

Nach Beispiel 1 hergestellte Proben werden 2 h bei 1 550 °C an Luft geglüht. Ihre Dichte beträgt danach ca. 98 % TD. Der tetragonale Anteil der $ZrO_2$-Teilchen ist 80 % (Rest monoklin) und im überschliffenen Zustand 30 %. Die Festigkeit ist 700 ± 45 MPa bei einer Umwandlungstiefe von 4,3 μm.

Beispiel 4

18 g $Al_2O_3$, 15 g MgO und 35 g reines $ZrO_2$ werden wie in Beispiel 1 beschrieben gemischt und gesintert. Sinterkörper dieser Zusammensetzung sind aufgrund des hohen MgO-Anteils stabil, außerdem ist ihr Schmelzpunkt 2 000 °C (nahe des ternären Eutektikums im System MgO-$ZrO_2$-$Al_2O_3$). Nach der Verdüsung wird das amorphe Pulver wie in Beispiel 1 geglüht. Zu 40 g dieses Pulvers werden 10 g $Al_2O_3$ zugemischt und wie in Beispiel 1 attritiert. Das gefriergetrocknete Mischpulver wird isostatisch bei 600 MPa gepreßt und bei 1 600 °C 1 h gesintert. Der Formkörper, der danach aus einer $Al_2O_3$-reichen Spinellmatrix mit 25 Vol.-% tetragonalen $ZrO_2$-Teilchen besteht, besitzt im gesinterten Zustand eine Festigkeit von 420 ± 30 MPa und im überschliffenen Zustand 480 ± 40 MPa.

Beispiel 5

40 g Schmelzmullitpulver, 15 g $ZrO_2$ und 4 g $Al_2O_3$ werden wie in Beispiel 1 beschrieben gemischt und gesintert und die Sinterkörper aufgeschmolzen, verdüst und anschließend bei 800 °C geglüht. Das Pulver wird darauf 6 h in Hexan, wie in Beispiel 1, attritiert, getrocknet, isostatisch verpreßt und 1 h bei 1 550 °C gesintert.

Die Sinterkörper werden darauf 10 Minuten bei 2 000 bar und 1 700 °C heißisostatisch gepreßt, wobei der Preßdruck nach den 10 Minuten Haltezeit bei 1 700 °C innerhalb einer Minute auf 50 bar reduziert wird (Vermeidung der Reaktion: Mullit + 2 $ZrO_2$ → 2 $ZrSiO_4$ + 3 $Al_2O_3$). Die daraus hergestellten Probekörper besitzen eine 4-Punkt-biegefestigkeit um 510 ± 30 MPa.

**Patentansprüche**

1. Verfahren zur Herstellung eines Formkörpers aus einer hochschmelzenden oxidkeramischen Matrix, in der Zirkoniumdioxid und/oder Hafniumdioxid sehr fein und gleichmäßig verteilt ist, dadurch gekennzeichnet, daß man eine keramische Schmelze aus Matrixmaterial und Zirkoniumdioxid und/oder Hafniumdioxid in feinteiliger Form mit solcher Geschwindigkeit abschreckt, daß eine nicht kristalline bzw. mikrokristalline Erstarrung erfolgt, der abgeschreckten feinteiligen Schmelze ggf. pulverisiertes Matrixmaterial in der zur Erzielung der gewünschten Endzusammensetzung von 5 bis 45, insbes. von 10 bis 30 Vol.-% an $ZrO_2$ und/oder $HfO_2$-Phase erforderlichen Menge zumischt, aus dem abgeschreckten Pulver einen Preßkörper formt und letzteren so einer Wärmebehandlung unterzieht, daß die Zirkoniumdioxid- und/oder Hafniumdioxid-Phase in Form von Teilchen mit einem mittleren Durchmesser von 0,3 bis 0,5 μm vorliegt.

2. Verfahren nach Anspruch 1, dadurch gekennzeichnet, daß man die Schmelze durch Flammsprühen in feinteilige Form bringt.

3. Verfahren nach Anspruch 1, dadurch gekennzeichnet, daß man die Schmelze durch Hochdruckwasserzerstäubung versprüht und abschreckt.

4. Verfahren nach Anspruch 1, 2 oder 3, dadurch gekennzeichnet, daß man die Schmelze zu Teilchen von weniger als 80 μm Durchmesser versprüht.

5. Verfahren nach Anspruch 4, dadurch gekennzeichnet, daß man die Schmelzeteilchen mit mindestens $10^3$ bis $10^4$ K/s abschreckt.

6. Verfahren nach Anspruch 5, dadurch gekennzeichnet, daß man eine Abschreckgeschwindigkeit von $10^4$ bis $10^6$ K/s anwendet.

7. Verfahren nach einem der vorhergehenden Ansprüche, dadurch gekennzeichnet, daß man eine Schmelze mit etwa eutektischer Nominalzusammensetzung bezüglich Matrix und Zirkoniumdioxid oder/und Hafniumdioxid verwendet.

8. Verfahren nach einem der vorhergehenden Ansprüche, dadurch gekennzeichnet, daß man als Matrixmaterial $Al_2O_3$, Spinell oder/und Mullit verwendet.

9. Verfahren nach einem der vorhergehenden Ansprüche, dadurch gekennzeichnet, daß man Mittel zur Stabilisierung der amorphen Phase zusetzt.

10. Verfahren nach Anspruch 9, dadurch gekennzeichnet, daß man Magnesiumoxid oder ein Seltenerdmetalloxid zusetzt.

11. Verfahren nach einem der vorhergehenden Ansprüche, dadurch gekennzeichnet, daß man zur Herstellung der Schmelze eine gesinterte Mischung von feinteiligem Matrixmaterial und feinteiligem Zirkoniumdioxid oder/und Hafniumdioxid verwendet.

12. Verfahren nach einem der vorhergehenden Ansprüche, dadurch gekennzeichnet, daß man als Wärmebehandlung eine Sinterung oder heißisostatische Verpressung vornimmt.

13. Verfahren nach Anspruch 12, dadurch gekennzeichnet, daß man den Formkörper so vorsintert, daß er keine offene Porosität mehr besitzt und ihn anschließend heiß isostatisch preßt.

14. Verfahren nach einem der vorhergehenden Ansprüche, dadurch gekennzeichnet, daß man den wärmebehandelten Formkörper überschleift.

15. Formkörper aus einer hochschmelzenden oxidkeramischen Matrix und einer in der Matrix fein und gleichmäßig verteilten Zirkondioxid-und/oder Hafniumdioxid-Phase, erhältlich durch Abschrecken einer keramischen Schmelze aus Matrixmaterial und Zirkoniumdioxid und/oder Hafniumdioxid in feinteiliger Form mit einer solchen Geschwindigkeit, daß eine nicht kristalline bzw. mikrokristalline Erstarrung erfolgt, gegebenenfalls Zumischung von pulverisiertem Matrixmaterial zur abgeschreckten feinteiligen Schmelze in der zur Erzielung der gewünschten Endzusammensetzung von 5 bis 45, insbesondere 10 bis 30 Vol.-% an $ZrO_2$ und/oder $HfO_2$-Phase erforderlichen Menge, Formung eines Preßkörpers aus dem abgeschreckten Pulver und Wärmebehandlung des Preßkörpers in der Weise, daß die Zirkoniumdioxid- und/oder Hafniumdioxid-Phase in Form von Teilchen mit einem mittleren Durchmesser von 0,3 bis 0,5 μm vorliegt.

16. Formkörper nach Anspruch 15, dadurch gekennzeichnet, daß die Matrix aus $Al_2O_3$, Spinell oder Mullit besteht.

17. Formkörper nach Anspruch 16, dadurch gekennzeichnet, daß die Spinellmatrix aus stöchiometrischem oder $Al_2O_3$-reichem Al-Mg-Spinell besteht.

18. Formkörper nach einem der Ansprüche 15 bis 17, dadurch gekennzeichnet, daß er zusätzlich weniger als 2 Gew.-% $Y_2O_3$, bezogen auf den $ZrO_2$-Anteil enthält.

**Claims**

1. A method of making a moulded body from a highmelting oxid-ceramic matrix, in which zirconium dioxide and/or hafnium dioxide is very finely and uniformly distributed, characterised in that a ceramic melt of matrix material and zirconium dioxide and/or hafnium dioxide in finely divided form is quenched at such a rate that a non-crystalline or microcrystalline solidification takes place, powdered matrix material in the amount required to obtain the desired final composition of from 5 to 45, in particular from 10 to 30 vol.% of $ZrO_2$ and/or $HfO_2$ phase being optionally added to the quenched finely divided melt, a pressed body is formed from the quenched powder and this pressed body is subjected to a heat treatment such that the zirconium dioxide and/or hafnium dioxide phase is present in the form of particules having a mean diameter of from 0.3 to 0.5 μm.

2. A method according to Claim 1, characterised in that the melt is brought into finely divided form by flame-spraying.

3. A method according to Claim 1, characterised in that the melt is sprayed and quenched by high-pressure water atomisation.

4. A method according to Claims 1, 2 or 3, characterised in that the melt is sprayed as particles of less than 80 μm in diameter.

5. A method according to Claim 4, characterised in that the melt particles are quenched at least $10^3$ to $10^4$ K/s.

6. A method according to Claim 5, characterised in that a quenching rate of from $10^3$ to $10^6$ K/s is used.

7. A method according to any of the preceding Claims, characterised in that a melt with an approximately eutectic nominal composition in respect of matrix and zirconium dioxide and/or hafnium dioxide is used.

8. A method according to any of the preceding Claims, characterised in that $Al_2O_3$, spinel and/or mullite are used as matrix material.

9. A method according to any of the preceding Claims, characterised in that agents for stabilising the amorphous phase are added.

10. A method according to Claim 9, characterised in that magnesium oxide or a rare earth metal oxide is added.

11. A method according to any of the preceding Claims, characterised in that to form the melt a sintered mixture of finely divided matrix material and finely divided zirconium dioxide and/or hafnium dioxide is used.

12. A method according to any of the preceding Claims, characterised in that as heat treatment a sintering or hot isostatic compression is undertaken.

13. A method according to Claim 12, characterised in that the moulded body is presintered in such a way that it no longer has any open porosity and it subsequently undergoes hot isostatic compression.

14. A method according to any of the preceding Claims, characterised in that the heat-treated moulded body is ground*.

15. A moulded body of a high-melting oxide-ceramic matrix and a zirconium dioxide and/or hafnium dioxide phase finely and uniformly distributed in the matrix, which can be obtained by quenching a ceramic melt of matrix material and zirconium dioxide and/or hafnium dioxide in finely divided form at such a rate that a non-crystalline or microcrystalline solidification takes place, optionally adding powdered matrix material to the quenched finely divided melt in the amount required to obtain the desired final composition of from 5 to 45, in particular 10 to 30 vol.% of $ZrO_2$ and/or $HfO_2$ phase, forming a pressed body from the quenched powder and heat treating the pressed body in such a way that the zirconium dioxide and/or hafnium dioxide phase is present in the form of particles having a mean diameter of from 0.3 to 0.5 μm.

16. A moulded body according to Claim 15, characterised in that the matrix consists of $Al_2O_3$, spinel or mullite.

17. A moulded body according to Claim 16, characterised in that the spinel matrix consists of stoichiometric or $Al_2O_3$-enriched Al-Mg spinel.

18. A moulded body according to any of Claims 15 to 17, characterised in that additionally it contains less than 2 % by weight of $Y_2O_3$ in relation to the $ZrO_2$ component.

**Revendications**

1. Procédé pour la fabrication d'un corps de moulage à partir d'une matrice en céramique

* « überschleift » oxydée à point de fusion élevée, dans laquelle le dioxyde de zirconium et/ou le dioxyde d'hafnium est très finement et uniformément réparti, caractérisé en ce que l'on procède à la trempe d'une masse fondue céramique à partir de la matière de matrice ou du dioxyde de zirconium et/ou du dioxyde d'hafnium en forme de particules fines à une vitesse telle qu'il se produit une solidification non cristalline ou microcristalline, que l'on ajoute par mélange à la masse fondue trempée à particules fines éventuellement de la matière de matrice pulvérisée dans les quantités nécessaires pour l'obtention de la composition finale désirée de 5 à 45, particulièrement de 10 à 30 % en volume, en phase ZrO$_2$ et/ou HfO$_2$, que l'on forme à partir de la poudre trempée une pièce pressée et que l'on soumet cette dernière à un traitement thermique tel que la phase dioxyde d'hafnium et/ou dioxyde de zirconium se présente sous la forme de particules avec un diamètre moyen de 0,3 à 0,5 µ.

2. Procédé selon la revendication 1, caractérisé en ce que l'on amène la masse fondue en la forme de particules fines par pulvérisation à la flamme.

3. Procédé selon la revendication 1, caractérisé en ce que l'on pulvérise et l'on trempe la masse fondue par atomisation à l'aide d'eau sous haute pression.

4. Procédé selon les revendications 1, 2 ou 3, caractérisé en ce que l'on pulvérise la masse fondue en particules de moins de 80 µ de diamètre.

5. Procédé selon la revendication 4, caractérisé en ce que l'on trempe les particules de masse fondue avec au minimum 10$^3$ à 10$^4$ K/s.

6. Procédé selon la revendication 5, caractérisé en ce que l'on utilise une vitesse de trempe de 10$^4$ à 10$^6$ K/s.

7. Procédé selon l'une des revendications précédentes, caractérisé en ce que l'on utilise une masse fondue avec une composition nominale sensiblement eutectique concernant la matrice et du dioxyde de zirconium ou/et du dioxyde d'hafnium.

8. Procédé selon l'une des revendications précédentes, caractérisé en ce que l'on utilise comme matière de matière du Al$_2$O$_3$, du spinelle ou/et de la mullite.

9. Procédé selon l'une des revendications précédentes, caractérisé en ce que l'on ajoute des agents pour la stabilisation de la phase amorphe.

10. Procédé selon la revendication 9, caractérisé en ce que l'on ajoute de l'oxyde de magnésium ou un oxyde d'élément de terres rares.

11. Procédé selon l'une des revendications précédentes, caractérisé en ce que l'on utilise pour la production de la masse fondue, un mélange fritté de matière de matrice à particules finement divisées et du dioxyde de zirconium à particules finement divisées ou/et du dioxyde d'hafnium.

12. Procédé selon l'une des revendications précédentes, caractérisé en ce que l'on procède en tant que traitement thermique à un frittage ou à un pressage isostatique à chaud.

13. Procédé selon la revendication 12, caractérisé en ce que l'on préfritte le corps de moulage, de telle sorte qu'il ne présente plus aucune porosité ouverte et que l'on procède subséquemment à un pressage isostatique à chaud.

14. Procédé selon l'une des revendications précédentes, caractérisé en ce que l'on repolit le corps de moulage traité thermiquement.

15. Corps de moulage à partir d'une matrice en céramique oxydée à point de fusion élevée et d'une phase de dioxyde d'hafnium et/ou de dioxyde de zirconium uniformément et finement répartie dans la matrice, pouvant être obtenu par la trempe d'une masse fondue céramique à partir de la matière de la matrice et du dioxyde de zirconium et/ou du dioxyde d'hafnium sous forme finement divisée à une vitesse telle qu'une solidification non cristalline ou microcristalline se produit, éventuellement avec l'addition par mélange de la matière de matrice pulvérisée à la masse fondue trempée finement divisée dans les quantités nécessaires pour l'obtention de la composition finale désirée de 5 à 45, notamment de 10 à 30 % en volume de phase-ZrO$_2$ et/ou HfO$_2$, formation d'une pièce pressée à partir de la poudre trempée et traitement thermique de la pièce pressée de telle sorte que la phase dioxyde de zirconium et/ou dioxyde d'hafnium se présente sous forme de particules ayant un diamètre moyen de 0,3 à 0,5 µ.

16. Corps de moulage selon la revendication 15, caractérisé en ce que la matrice se compose de Al$_2$O$_3$, du spinelle ou de la mullite.

17. Corps de moulage selon la revendication 16, caractérisé en ce que la matrice en spinelle est constituée par du spinelle de Al-Mg-stœchiométrique ou riche en Al$_2$O$_3$.

18. Corps de moulage selon l'une des revendications 15 à 17, caractérisé en ce qu'il contient complémentairement moins de 2 % de Y$_2$O$_3$ en poids, rapporté à la fraction ZrO$_2$.

# FIG . 1

# FIG. 2